# EUROPEAN PATENT SPECIFICATION

(11) **EP 2 582 251 B1**
(45) Date of publication and mention of the grant of the patent: **04.08.2021**
(21) Application number: 11770514.5
(22) Date of filing: 17.06.2011
(51) Int. Cl.: A23G 3/00

(54) **SOFT COATED POWDER CENTRE-FILLED GUM**
WEICH BESCHICHTETES UND IM KERN PULVERGEFÜLLTES KAUGUMMI
GOMME À ENROBAGE MOU ET COEUR REMPLI DE POUDRE

(30) Priority: 18.06.2010 GB 201010292
(43) Date of publication of application: 24.04.2013
(73) Proprietor: Intercontinental Great Brands LLC, East Hanover, NJ 07936 (US)
(72) Inventor: BOUDY, Francois, F-01220 Divonne Les Bains (FR); BUSOLIN, Andre, F-01210 Ornex (FR); LAVIE, Richard, CH-1163 Etoy (CH); DETAVERNIER, Alexis, 1010 Lausanne (CH)
(74) Representative: Wilson Gunn
(86) International application number: PCT/IB2011/002195
(87) International publication number: WO 2011/158123

(56) References cited:
- EP-A1- 1 350 434
- EP-A1- 2 143 336
- WO-A2-00/38532
- None

## Description

The present invention relates to a chewing gum composition and a chewing gum piece which is able to deliver a unique and improved mouthfeel and/or taste sensation for a consumer.

A primary aim of many chewing gum products on the market today is to provide an oral experience for a consumer which imparts a different taste and/or mouthfeel sensation, in order to differentiate them from other similar products which are available.

Many types of chewing gum compositions which have a centre-fill, or core, region surrounded by one or more outer chewing gum layers are known. The core may be filled with any number of edible materials, which material may be in a solid, semi-solid or liquid form.

Chewing gum compositions which have a solid in the centre-fill in a powder form are known from, for example, EP 0126570 in the name of the Warner-Lambert Company. In EP 0126570, the centre-fill powder predominantly comprises one or more sweeteners.

EP2143336A1 describes the production of a chewing gum composition comprising a solid core, one or more layers of compressed chewing gum granules, and an outermost coating of a hard panned, smooth coating.

WO00/38532A2 describes a chewing gum core coated in alternating layers of a polyol-based syrup and polyol powder, with an outermost layer of dried polyol-based syrup.

EP1350434A1 discloses a chewing gum composition comprising compressed chewing gum granules which may optionally be coated with a hard, smooth coating.

One oral experience it is desired to provide for consumers using chewing gum compositions is a cooling sensation. This can be provided by employing a substance which is able to impart such a cooling sensation, for example, xylitol, sorbitol, erythritol or maltitol, as a part of the chewing gum composition. When the composition is consumed, a person's saliva dissolves the cooling substance, releasing the cooling properties of the substance and imparting a cooling sensation to the oral cavity of the person.

However, in the highly competitive confectionery industry, new products are always being sought which are able to deliver new and different oral experiences that their manufacturers may be able to provide for their customers.

It would therefore be desirable to provide a chewing gum composition which is able to deliver a cooling mouthfeel and/or taste sensation for a consumer which is unique and improved. This is addressed by the present invention. The present invention is defined by the appended claims.

According to the present invention there is provided a chewing gum composition comprising one or more layers surrounding a central core, at least one of the one or more layers surrounding the central core being a layer of chewing gum, wherein the central core comprises a first material in a powder form having a first average grain size, and wherein the outermost layer of the one or more layers comprises a coating comprising a second material in a powder form having a second average grain size.

Having first and second powder materials in the core and coating, respectively, gives a unique mouthfeel and/or taste sensation for a consumer when the powders are brought into contact with saliva, and the powder materials in the coating and in the core dissolve in sequence.

As used herein, the terms 'core' and 'centre-fill' are considered to be interchangeable in their use to denote the centre of the chewing gum composition.

According to the present invention there is provided a chewing gum composition comprising one or more layers surrounding a central core, a layer of chewing gum surrounding the central core, and an outer layer substantially surrounding the layer of chewing gum, wherein the central core comprises a first material in a powder form having a first average grain size, and wherein the outer layer comprises a coating comprising a second material in a powder form having a second average grain size.

The first average grain size of the first material and the second average grain size of the second material may be approximately the same. By 'approximately the same', it is meant that the respective average grain sizes differ by no more than about 10% or in some embodiments no more than about 5%. In embodiments wherein the average grain size of the first and second materials is approximately the same, the average grain size may be between 30-1500 microns, typically between about 30-900 microns.

According to another aspect of the present invention, the second average grain size of the second material is smaller than the first average grain size of the first material. Typically, the first average grain size of the first material is between about 100-1500 microns, more typically between about 250-1000 microns, and still more typically between about 300-900 microns, and the second average grain size of the second material is typically between about 30-300 microns, more typically between about 50-250 microns, still more typically between about 60-200 microns, and most typically between about 90-200 microns.

According to one embodiment of the invention, the first average grain size of the first material is between about 300-900 microns while the second average grain size of the second material is between about 60-200 microns.

Where the size of the second average grain size of the second material is less than that of the first average grain size of the first material, the second material provides a soft, "sanded" coating as the outermost layer on the chewing gum composition. This provides the effect of a softer, more chewy coating for the chewing gum composition, rather than a harder, crunchier coating.

According to a further embodiment of the invention, the first average grain size of the first material may be smaller than the second average grain size of the second material.

Typically, in the embodiment where the first average grain size of the first material is smaller than the second average grain size of the second material, the first average grain size of the first material is typically between about 30-300 microns, more typically between about 50-250 microns, still more typically between about 60-200 microns, and most typically between about 90-200 microns, and the second average grain size of the second material is typically between about 100-1500 microns, more typically between about 250-1000 microns, and still more typically between about 300-900 microns.

According to one embodiment of the invention, the first average grain size of the first material is between about 60-200 microns while the second average grain size of the second material is between about 300-900 microns.

When the chewing gum piece is placed into a consumer's mouth, saliva solubilises the grains or crystals of the second material in the outermost layer. In the embodiment of the invention where the average grain size of the second material in the outermost layer is relatively small, the second material is rapidly dissolved by the saliva, creating an initial burst of a cooling sensation for the consumer before the chewing gum piece has even been chewed.

The crystals of the first and second materials in the chewing gum piece may give a consumer a 'gritty' oral sensation from the coating and centre-fill, depending on the crystal grain size until the crystals dissolve, or alternatively may give a powdery oral sensation. This helps to indicate to a consumer that there is a unique oral sensation being imparted by the composition. The chewing gum composition of the invention also imparts a feeling of freshness to the mouth of a consumer.

According to one embodiment of the invention, the first and second materials are able to provide a cooling mouthfeel and/or taste sensation, or they are able to provide other, different mouthfeel and/or taste sensations, such as a soft powder mouthfeel from the coating with a gritty mouthfeel from the centre, or soft powder mouthfeel from the coating and a liquid-feeling from the centre when the materials are dissolved in a person's saliva. Alternatively, one or both of the first and second materials may be able to provide a warming or tingling mouthfeel and/or taste sensation, or mouthfeels and/or taste sensations comprising different levels of sweetness or different flavours or intensities of the same or different flavours, or a combination of any of these.

The first material and second material may either be or may comprise the same material, or they may comprise different materials. Typically, however, the first material and second material comprise at least an amount of the same material.

The first material typically constitutes between about 60 to about 99 wt% of the total centre-fill material, more typically between about 70 to about 95 wt%, still more typically about 80-95 wt%.

Exemplary, but non-limiting, examples of edible materials which are able to impart the desired mouthfeel and/or taste sensation to a consumer upon chewing of the composition include bulk materials such as polyols which are able to impart a cooling sensation to the oral cavity of a consumer, or bulk sweeteners which are able to impart a distinct taste sensation to the oral cavity of a consumer.

Alternatively, materials which are able to impart a warming sensation for a consumer, or a fizzy sensation may form part of the centre-fill and/or coating powder, such as using a combination of citric acid/citrate and bicarbonate, for example.

Non-limiting examples of edible materials which are able to act as the first and/or second material in the compositions of the invention to impart a cooling and/or gritty sensation to the oral cavity of a consumer include, but are not limited to, xylitol, sorbitol, erythritol, maltitol, isomalt, or a combination of any two or more thereof. In some embodiments the first material comprises xylitol alone, or a combination of xylitol with isomalt and/or maltitol. However, any other cooling agents known to the skilled person are also envisaged within the scope of the present invention.

Non-limiting examples of edible materials which are able to act as the first and/or second material in the compositions of the invention to impart a sweetening sensation include, but are not limited to, monosaccharides, disaccharides, and polysaccharides such as sugar, sucrose, xylose, ribose, glucose, mannose, galactose, fructose, dextrose, maltose, and the like.

Each of these materials can be individually and/or independently comprised in the first material and second materials.

According to one aspect of the present invention, the first material and second material may each comprise a material which is able to impart a cooling sensation to the oral cavity of a consumer upon consumption of the composition.

In the embodiment where the first and second materials are able to provide a cooling mouth feel and/or taste sensation, once the chewing gum piece is being chewed, the first material in the core, which typically has a larger average grain size than that of the second material in the outermost layer, is exposed to contact with saliva and is also dissolved, but typically more slowly due to the larger average grain size of the first material. This solubilisation of the first material in the centre-fill creates a liquid cooling feeling flowing out from the gum, providing a pleasant cooling sensation for the consumer. In the embodiment where the average grain size of the first material is larger than that of the second material, the cooling sensation imparted by the first material will be more prolonged due to the slower rate of solubilisation of the first material. The experience of an initial, rapid cooling sensation upon placing the chewing gum piece in the mouth, followed by a more intense and longer cooling sensation upon chewing of the chewing gum piece, is one which has never before been developed and is not provided by any currently or previously available chewing gum product.

Typically, the core region constitutes between about 3-60 wt% of the whole gum composition, more typically between about 5-50 wt%, still more typically between about 5-40 wt%, still more typically about 10-30 wt%, and most typically between about 12-20 wt%.

According to one embodiment, when the first material and second material both comprise a polyol, at least an amount of the same polyol(s) should be comprised in each of the first and second materials, and more typically the first and second materials should comprise substantially 100% of the same polyol(s). According to one embodiment, when 100% of the same polyol(s) is/are used in each of the first and second materials, the polyol is xylitol or a mixture of xylitol with isomalt and/or maltitol.

The coating comprising a second material in a powder form having a second average grain size is typically a coating syrup which comprises the second material in a powder form as a part thereof. In one embodiment, a coating syrup is added to the exterior of the chewing gum layer, and the grains of the second material are then added to the surface of the coating syrup.

The second material may be applied to the coating syrup in conjunction with a gumming agent, such as gum arabic. According to one embodiment, the second material is added to the coating syrup together with a gumming agent and a flavouring agent.

According to one embodiment, the overall coating constitutes between about 3-50 wt% of the whole chewing gum composition, more typically between about 10-40 wt%, still more typically between about 25-35 wt%, still more typically about 30 wt%.

There may be between about 50-75 wt% of the polyol in the coating syrup, based upon the overall weight of dry solids in the coating syrup, more typically between about 55-65 wt%, still more typically about 60 wt%. The gumming agent may constitute between about 2-20 wt%, more typically between about 5-15 wt%, still more typically about 10 wt%, based upon the overall weight of the coating syrup, while the flavouring agent is only usually present in small quantities, typically between about 0.0025-0.01 wt% based upon the overall weight of the coating syrup.

According to one embodiment, the coating syrup may comprise an amount of a polyol, such as but not limited to xylitol, sorbitol, erythritol, maltitol, isomalt, or a combination of any two or more thereof, as a major component, a gumming agent, such as but not limited to gum arabic, a colouring agent, with the balance being made up with water.

However, other minor components may be added to the coating syrup or powder coating formulation as desired. Such components will be readily apparent to a person skilled in the art.

According to a further embodiment, the coating layer of the chewing gum composition may comprise more than one layer.

Other components may also be included in the centre-fill with the first material and/or in the coating with the second material. By way of example, these components may include, but are not limited to, one or more sweeteners, one or more natural or synthetic flavouring agents, an anti-caking agent, a lubricant, an acidulant or food acid, filler, or one or more colouring agents.

Exemplary flavours which are useful include those well known to the chewing gum art. These flavouring agents may be chosen from synthetic flavor oils/flavouring aromatics and/or oils, oleo resins and extracts derived from plants, leaves, flowers, fruits and so forth, and combinations thereof. Representative flavor oils include spearmint oil, cinnamon oil, oil of wintergreen (methylsalicylate) and peppermint oils.

Also useful are artificial, natural or synthetic fruit flavours such as citrus oil including lemon, orange, grape, lime and grapefruit and fruit essences including apple, strawberry, cherry, pineapple and so forth.

According to one embodiment, the first material in the core may comprise one flavour sensation, while the second material may comprise a second, different flavour sensation.

Acidulents or food acids which are useful include citric acid, malic acid, tartaric acid and the like, as well as mixtures thereof. In cases where the outer shell of the gum piece is a fruit or citrus flavor, one of these acidulents may be included in the powdered centre-fill mixture or could be added into the coating to further impart a tartness to the overall taste of the chewing gum. Thus, the fruitiness, for example, of a citrus flavoured outer-shell is supported by the tartness of the centre-fill. The most typical of the above-mentioned food acids are citric acid and malic acid, and mixtures thereof.

Fillers may be added to the centre-fill and may be selected from those well known to the art. Among the useful fillers for the centre-fill are dextrins, maltodextrins, polydextrose and dicalcium phosphate. Maltodextrins have the additional advantage of providing enhanced sweetness, thereby complementing the sweetening agent already present. Polydextrose is generally understood in the art to be a randomly crosslinked polymer of all types of glucosidic bonds. Sorbitol end groups and monoester bonds with citric acid are ordinarily present in the polymer as well. Small amounts of residual reactants such as glucose, sorbitol and citric acid may be present in commerically available polydextrose. The filler is primarily added for the purpose of contributing bulk to the center-fill, particularly when the sweetener is of the artificial variety.

Examples of lubricants useful in the centre-fills are magnesium stearate and compounds of the silicate family such as talc and Cabosil (RTM).

Should it be desirable to have a centre-fill or coating be a particular colour, for aesthetic reasons or for coordination with the flavour perception, any food grade colour which is compatible may be employed. For example, the F. D. & C. colours are of particular utility and are generally present in trace amounts.

According to one embodiment, the centre-fill may also comprise an agent to help the flowability of the powder. One exemplary, but non-limiting agent for this purpose is tri-calcium phosphate. When used, this typically constitutes between about 0.5 to about 1.0 wt% of the total centre-fill material.

According to one embodiment of the invention, an exemplary core region of the composition of the invention comprises xylitol (or a mixture of xylitol and isomalt and/or maltitol), talc, a peppermint flavouring agent, menthol and baking soda (sodium bicarbonate).

According to one embodiment of the invention, there is only one layer of gum located between the centre-fill region and the layer comprising the second material, the one layer of gum surrounding the centre-fill region. However, if desired, there may be two or more layers of gum located between the centre-fill region and the layer comprising the second material, these layers of gum all surrounding the centre-fill region. Alternatively, according to another embodiment, there may a layer of candy surrounding the core, which candy may be immediately adjacent the core or may also surround a gum layer.

As used herein, it will be understood that all references to a chewing gum composition or a chewing gum piece also includes reference to a bubble gum composition or piece.

The chewing gum composition of the invention also comprises a gum component. The gum component comprises a water-insoluble gum base portion, together with a water-soluble portion which comprises primarily sweeteners and flavours.

The gum component typically constitutes a layer which surrounds the centre-fill region of the composition of the present invention. This gum layer may be immediately adjacent the centre-fill region of there may be one or more layers of other materials in between. The gum component may be sugar free or may contain sugar.

The water-insoluble gum base portion of the gum component comprises one or more elastomers. The elastomers employed in the gum base of the chewing gum will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof. Specific examples of elastomers typically employed include, but are not limited to, polyisobutylene, styrene butadiene rubber, butyl rubber, and combinations thereof. Additional useful polymers include, but are not limited to, polybutylmethacrylate/acrylic acid copolymers, polyvinylacetate/vinylalcohol copolymers, microcrystalline cellulose, sodium carboxymethyl cellulose, hydroxylpropylmethyl cellulose, crosslinked cellulose acetate phthalate, crosslinked hydroxyl methyl cellulose polymers, zein, crosslinked polyvinyl pyrrolidone, polymethylmethacrylate/acrylic acid copolymers, copolymers of lactic acid, polyhydroxyalkanoates, plasticized ethylcellulose, polyvinyl acetatephthalate and combinations thereof.

In general, the elastomer employed in the gum base may have an average molecular weight of at least about 200,000. Typically, the elastomer employed in the gum base has an average molecular weight from about 200,000 to about 2,000,000.

The amount of elastomer employed in the gum base may vary depending upon various factors such as the type of gum base used, the consistency of the gum composition desired and the other components used in the composition to make the final chewing gum product. In general, the elastomer may be present in the gum base in an amount from about 1-30 wt% of the gum base. Typically, the elastomer is present in an amount from about 2-15 wt% of the gum base. More typically, the elastomer is present in the gum base in an amount from about 3-10 wt% of the gum base. However, in other embodiments, the elastomer will be present in the gum base in an amount from about 10-60 wt%, typically from about 35-40 wt%.

In some embodiments, the chewing gum base may include a texture-modifier. In general, the texture-modifier has a molecular weight of at least about 2,000. The texture-modifier may include a vinyl polymer, for example, polyvinyl acetate, polyvinyl laurate acetate, polyvinyl alcohol or mixtures thereof. Typically, the texture-modifier is present in an amount from about 15-70 wt% of the gum base. More typically, the texture-modifier is present in an amount from about 20-60 wt% of the gum base. Most typically, the texture-modifier is present in an amount from about 30-45 wt% of the gum base.

In addition to the components set out above, the gum base may include a variety of other ingredients, such as components selected from elastomer solvents, emulsifiers, plasticizers, fillers, and mixtures thereof.

In some embodiments, the gum base may also contain less than conventional amounts of elastomer solvents to aid in softening the elastomer component. By less than conventional amounts is meant that the elastomer solvent is employed in the gum base, for example, in amounts from 0 to about 5.0 wt% and preferably from about 0.1-3.0 wt% of the gum base. In some embodiments, the gum base includes a maximum of about 5.0 wt% of an elastomer solvent. In other embodiments, the gum base is free of added elastomer solvents. In some embodiments the gum base is also free of added waxes.

In other embodiments, conventional amounts of elastomer solvents are incorporated in the gum bases to aid in softening the elastomer component. Such elastomer solvents may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Examples of elastomer solvents suitable for use herein may include, but are not limited to, the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof.

The gum base also may include emulsifiers which aid in dispersing the immiscible components of the gum base into a single stable system. The emulsifiers useful in this invention include glyceryl monostearate, lecithin, fatty acid monoglycerides, diglycerides, propylene glycol monostearate, and the like, and mixtures thereof. In some embodiments, the emulsifier may be employed in amounts from 0 to about 50 wt% and, more typically from about 2-7 wt% of the gum base. In other embodiments, the emulsifier may be employed in amounts from about 2-15 wt% and, more typically, from about 7-11 wt% of the gum base.

The gum base also may include plasticizers or softeners to provide a variety of desirable textures and consistency properties. Because of the low molecular weight of these ingredients, the plasticizers and softeners are able to penetrate the fundamental structure of the gum base, making it plastic and less viscous. Useful plasticizers and softeners include, but are not limited to, triacetin (glyceryl triacetate), lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, waxes, and the like, and mixtures thereof. Other softeners include carob, tragacanth, locust bean, and carboxymethyl cellulose. In some embodiments, the aforementioned plasticizers and softeners are generally employed in the gum base in amounts up to about 20 wt% of the gum base, and more specifically in amounts from about 2-12 wt% of the gum base. In other embodiments, the plasticizers and softeners are generally employed in the gum base in amounts up to about 20 wt% of the gum base and, more specifically, in amounts from about 9-17 wt% of the gum base.

Plasticizers also include hydrogenated vegetable oils, such as soybean oil and cottonseed oils, which may be employed alone or in combination. These plasticizers provide the gum base with good texture and soft chew characteristics. These plasticizers and softeners are generally employed in amount from about 5-14 wt% and, more specifically, in amounts from about 5-13.5 wt% of the gum base. Suitable waxes, include for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like.

Wax can be present in the gum base in an amount from about 1-15 wt% of the gum base. In some embodiments, when used, the wax is typically present in an amount from about 2-10 wt% of the gum base and, more typically, is present in an amount from about 3-8 wt% of the gum base. In other embodiments when wax is used, the wax may be present in the gum base in an amount from about 6-10% and, more typically, from about 7-9.5 wt% of the gum base, in some embodiments, the gum base includes a maximum of about 8 wt% of a wax. In other embodiments, the gum base may be free of added wax.

In some embodiments when wax is present, the waxes employed may have a melting point below about 60°C and, more typically, between about 45°C and about 55°C. The wax having a low melting point may be, for example, a paraffin wax. In addition to low melting point waxes, in some embodiments, waxes having a higher melting point may be used in the gum base in amounts up to about 5 wt% of the gum base. Such high melting waxes include, for example, beeswax, vegetable wax, candelilla wax, carnuba wax, most petroleum waxes, and the like and mixtures thereof. Anhydrous glycerin also may be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

In some embodiments, the gum base may include bulking agents that are water-insoluble and/or mineral-based. In particular, the gum base of this invention also may include effective amounts of bulking agents such as mineral adjuvants which may serve as fillers and textural agents. Useful mineral adjuvants may include, but are not limited to, calcium carbonate, magnesium carbonate, alumina, aluminium hydroxide, aluminium silicate, talc, starch, tricalcium phosphate, dicalcium phosphate, calcium sulfate, atomite, and the like, and mixtures thereof. These fillers or adjuvants may be used in the gum base compositions in various amounts. The filler may be present in an amount from 0 to about 60 wt% of the gum base and/or composition and, more specifically, from 0 to about 50 wt% and, even more specifically, from 0 to about 40 wt% of the gum base and/or chewing gum composition. In some embodiments, the filler may be present in an amount from 0 to about 30 wt% of the gum base and/or chewing gum composition. Moreover, in some embodiments, the amount of filler will be from 0 to about 15 wt% of the gum base and/or chewing gum composition and, more specifically, from about 3-11 wt% of the gum base and/or chewing gum composition. In other embodiments, the amount of filler, when used, may be present in an amount from about 15-40 wt% and, typically, from about 20-30 wt% of the gum base.

In some embodiments, the gum base also may include at least one hydrophilic, water-absorbing polymer to help reduce the stickiness of the gum base and any resultant gum product made from the gum base. Suitable hydrophilic, water-absorbing polymers include, but are not limited to, native and modified starches; chemically modified cellulose, including methyl cellulose, ethyl cellulose, carboxymethyl cellulose, hydroxypropyl cellulose; gums including xanthan gum, carrageenan gum, guar gum, gum arabic, locust bean gum, curdlan, arabinoxylan, agara, and alginates; and pectin and gelatin.

In some embodiments, at least one antioxidant may be present in the chewing gum bases. Typically, the antioxidant is water-soluble. Suitable antioxidants include, for example, butylated hydroxytoluene (BHT), butylated hydroxyanisole (BHA), propyl gallate, vitamin C, vitamin E and mixtures thereof. When an antioxidant is included in the gum base, the antioxidant is generally present in an amount from about 0.01-0.3 wt% of the gum base. Typically, the antioxidant is included in the gum base in an amount from about 0.05-0.1 wt% of the gum base.

A chewing gum base as discussed hereinabove may be incorporated in a chewing gum composition in an amount from about 5-95 wt%. More typically, a chewing gum base may be present in an amount from about 28-42 wt% of the total chewing gum composition, and even more typically, the range may be from about 28-30 wt% of the total chewing gum composition. This weight percent value for the amount of chewing gum base is based on the gum region of the chewing gum composition rather than the chewing gum composition as a whole.

Any of the optional components described above may be incorporated into the chewing gum composition, as well as other conventional additives known to one having ordinary skill in the art may be incorporated into the chewing gum base of the chewing gum compositions or any coating that the chewing gum product may contain.

The chewing gum compositions of the invention may be formed into a variety of shapes and sizes and may take various product forms, including without limitation, sticks, slabs, chunks, balls, pillows, tablet, pellet, pressed tablet, deposited, compressed chewing gum or any other suitable format apparent to the skilled person.

The manner in which the gum base components are mixed is not critical and such mixing is performed using standard apparatuses known to those skilled in the art.

The water-soluble portion of the chewing gum composition may contain bulk sweeteners including sugars such as sucrose, dextrose, maltose, fructose and the like or sugar alcohols such as sorbitol, mannitol, xylitol, maltitol, isomalt, erythritol and hydrogenated starch hydrolysates and combinations thereof. Bulk sweeteners may be present in amounts up to about 90% by weight of the final gum base composition. High intensity sweeteners such as aspartame, acesulfam salts, aliatame saccharin and the like may also be present. These sweeteners may be present in amounts of up to about 1% by weight of the final gum base composition.

Other components such as flavouring agents may be included in the water-soluble portion of the chewing gum composition. Flavours which may be used include those flavours known to the skilled artisan, such as natural and artificial flavours. These flavours may be chosen from synthetic flavour oils and flavouring aromatics and/or oils, oleoresins and extracts derived from plants, leaves, flowers, fruits, and so forth, and combinations thereof. Non-limiting representative flavour oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavourings are artificial, natural and synthetic fruit flavours such as vanilla, and citrus oils including lemon, orange, lime, grapefruit, yazu, sudachi, and fruit essences including apple, pear, peach, grape, strawberry, raspberry, cherry, plum, pineapple, watermelon, apricot, banana, melon, ume, cherry, raspberry, blackberry, tropical fruit, mango, mangosteen, pomegranate, papaya, and so forth.

Other potential flavours include a milk flavour, a butter flavour, a cheese flavour, a cream flavour, and a yogurt flavour; a vanilla flavour; tea or coffee flavours, such as a green tea flavour, a oolong tea flavour, a tea flavour, a cocoa flavour, a chocolate flavour, and a coffee flavour; mint flavours, such as a peppermint flavour, a spearmint flavour, and a Japanese mint flavour; spicy flavours, such as an asafetida flavour, an ajowan flavour, an anise flavour, an angelica flavour, a fennel flavour, an allspice flavour, a cinnamon flavour, a camomile flavour, a mustard flavour, a cardamom flavour, a caraway flavour, a cumin flavour, a clove flavour, a pepper flavour, a coriander flavour, a sassafras flavour, a savoury flavour, a Zanthoxyli Fructus flavour, a perilla flavour, a juniper berry flavour, a ginger flavour, a star anise flavour, a horseradish flavour, a thyme flavour, a tarragon flavour, a dill flavour, a capsicum flavour, a nutmeg flavour, a basil flavour, a marjoram flavour, a rosemary flavour, a bayleaf flavour, and a wasabi (Japanese horseradish) flavour; alcoholic flavours, such as a wine flavour, a whisky flavour, a brandy flavour, a rum flavour, a gin flavour, and a liqueur flavour; floral flavours; and vegetable flavours, such as an onion flavour, a garlic flavour, a cabbage flavour, a carrot flavour, a celery flavour, mushroom flavour, and a tomato flavour. These flavours may be used in liquid or solid form and may be used individually or in admixture. Commonly used flavours include mints such as peppermint, menthol, spearmint, artificial vanilla, cinnamon derivatives, and various fruit flavours, whether employed individually or in admixture.

Other useful flavourings include aldehydes and esters such as cinnamyl acetate, cinnamaldehyde, citral diethylacetal, dihydrocarvyl acetate, eugenyl formate, p-methylamisol, and so forth may be used. Generally any flavouring or food additive such as those described in Chemicals Used in Food Processing, publication 1274, pages 63-258, by the National Academy of Sciences, may be used. This publication is incorporated herein by reference.

Further examples of aldehyde flavourings include but are not limited to acetaldehyde (apple), benzaldehyde (cherry, almond), anisic aldehyde (liquorice, anise), cinnamic aldehyde (cinnamon), citral, *i.e.* alpha-citral (lemon, lime), neral, *i.e.* beta-citral (lemon, lime), decanal (orange, lemon), ethyl vanillin (vanilla, cream), heliotrope, *i.e.* piperonal (vanilla, cream), vanillin (vanilla, cream), alpha-amyl cinnamaldehyde (spicy fruity flavours), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, *i.e.* trans-2 (berry fruits), tolyl aldehyde (cherry, almond), veratraldehyde (vanilla), 2,6-dimethyl-5-heptenal, *i.e.* melonal (melon), 2,6-dimethyloctanal (green fruit), and 2-dodecenal (citrus, mandarin), cherry, grape, strawberry shortcake, and mixtures thereof.

The amount of flavouring agent employed herein may be a matter of preference subject to such factors as the individual flavour and the strength of flavour desired. Thus, the amount of flavouring may be varied in order to obtain the result desired in the final product and such variations are within the capabilities of those skilled in the art without the need for undue experimentation. In general, the flavour agent is present in amounts from about 0.02% to about 5.0%, more typically from about 0.1% to about 4.0%, and even more typically about 0.8% to about 3.0% by weight of the chewing gum product.

A variety of other traditional ingredients also may be included in the chewing gum products in effective amounts such as colouring agents, antioxidants, preservatives, and the like. Colouring agents may be used in amounts effective to produce the desired colour. The colouring agents may include pigments which may be incorporated in amounts up to about 6% by weight of the composition. For example, titanium dioxide may be incorporated in amounts up to about 2%, typically less than about 1%, by weight of the composition. The colorants may also include natural food colours and dyes suitable for food, drug and cosmetic applications. These colorants are known as F.D. & C. dyes and lakes. The materials acceptable for the foregoing uses are typically water-soluble. Illustrative non-limiting examples include the indigoid dye known as F.D. & C. Blue No. 2, which is the disodium salt of 5,5-indigotindisulfonic acid. Similarly, the dye known as F.D.& C. Green No. 1 comprises a triphenylmethane dye and is the monosodium salt of 4-[4-(N-ethyl-p-sulfoniumbenzylamino) diphenylmethylene]-[1-(N-ethyl-N-p-sulfoniumbenzyl)-delta-2,5-cyclohexadieneimine]. A full recitation of all F.D. & C. colorants and their corresponding chemical structures may be found in the Kirk-Othmer Encyclopaedia of Chemical Technology, 3rd Edition, in volume 5 at pages 857-884.

Breath-freshening agents, in addition to the flavours and cooling agents described hereinabove, may include a variety of compositions with odour-controlling properties. Such breath-freshening agents may include, without limitation, cyclodextrin and magnolia bark extract. The breath-freshening agents may further be encapsulated to provide a prolonged breath-freshening effect. Examples of malodour-controlling compositions are included in U.S. Patent No. 5,300,305 to Stapler et al. and in U.S. Patent Application Publication Nos. 2003/0215417 and 2004/0081713.

A variety of oral care products also may be included in some embodiments of the instant chewing gum compositions. Such oral care products may include tooth whiteners, stain removers, anti-calculus agents, and anti-plaque agents. Oral care agents that may be used include those actives known to the skilled artisan, such as, but not limited to, surfactants, breath-freshening agents, anti-microbial agents, antibacterial agents, oral malodour control agents, fluoride compounds, quaternary ammonium compounds, remineralisation agents and combinations thereof. Examples of these include, but are not limited to hydrolytic agents including proteolytic enzymes, abrasives such as hydrated silica, calcium carbonate, sodium bicarbonate and alumina, other active stain-removing components such as surface-active agents, such as anionic surfactants such as sodium stearate, sodium palminate, sulphated butyl oleate, sodium oleate, salts of fumaric acid, glycerol, hydroxylated lecithin, sodium lauryl sulphate and chelators such as polyphosphates, which are typically employed in dentifrice compositions as tartar control ingredients. Also included are tetrasodium pyrophosphate and sodium tri-polyphosphate, sodium tripolyphosphate, xylitol, hexametaphosphate, and an abrasive silica. Further examples are included in the following U.S. Patents : U.S. Patent Nos. 5,227,154 to Reynolds, 5,378,131 to Greenberg and 6,685,916 to Holme et al. Suitable oral care actives such as remineralisation agents, antimicrobials, and tooth-whitening agents are described in assignee's co-pending U.S. patent application Ser. No. 10/901,511, filed Jul. 29, 2004 and entitled "Tooth-Whitening Compositions and Delivery Systems Therefor", and mixtures thereof.

A variety of drugs, including medications, herbs, and nutritional supplements may also be included in the chewing gum compositions. Examples of useful drugs include ace-inhibitors, antianginal drugs, anti-arrhythmias, anti-asthmatics, anti-cholesterolemics, analgesics, anaesthetics, anti-convulsants, anti-depressants, antidiabetic agents, anti-diarrhoea preparations, antidotes, anti-histamines, anti-hypertensive drugs, anti-inflammatory agents, anti-lipid agents, anti-manics, anti-nauseants, anti-stroke agents, anti-thyroid preparations, anti-tumour drugs, anti-viral agents, acne drugs, alkaloids, amino acid preparations, anti-tussives, anti-uricemic drugs, anti-viral drugs, anabolic preparations, systemic and non-systemic anti-infective agents, anti-neoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra®, fertility agents, gastrointestinal agents, homeopathic remedies, hormones, hypocalcaemia and hypocalcaemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, anti-pyretics, appetite suppressants, expectorants, anti-anxiety agents, anti-ulcer agents, anti-inflammatory substances, coronary dilators, cerebral dilators, peripheral vasodilators, psycho-tropics, stimulants, anti-hypertensive drugs, vasoconstrictors, migraine treatments, antibiotics, tranquilizers, anti-psychotics, anti-tumour drugs, anticoagulants, anti-thrombotic drugs, hypnotics, anti-emetics, anti-nauseants, anti-convulsants, neuromuscular drugs, hyper- and hypo-glycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof.

Examples of active ingredients contemplated for use in the present inventive chewing gum compositions include antacids, H2-antagonists, and analgesics. For example, antacid dosages can be prepared using the ingredients calcium carbonate alone or in combination with magnesium hydroxide, and/or aluminium hydroxide. Moreover, antacids can be used in combination with H2-antagonists.

Analgesics include opiates and opiate derivatives, such as Oxycontin, ibuprofen, aspirin, acetaminophen, and combinations thereof that may optionally include caffeine.

Other drug ingredients for use in embodiments include anti-diarrhoeals such as immodium AD, anti-histamines, anti-tussives, decongestants, vitamins, and breath-fresheners. Also contemplated for use herein are anxiolytics such as Xanax; anti-psychotics such as clozaril and Haldol; non-steroidal anti-inflammatories (NSAIDs) such as ibuprofen, naproxen sodium, Voltaren and Lodine, anti-histamines such as Claritin, Hismanal, Relafen, and Tavist; anti-emetics such as Kytril and Cesamet; bronchodilators such as Bentolin, Proventil; anti-depressants such as Prozac, Zoloft, and Paxil; anti-migraines such as Imigra, ACE-inhibitors such as Vasotec, Capoten and Zestril; anti-Alzheimer's agents, such as Nicergoline; and CaH-antagonists such as Procardia, Adalat, and Calan.

Moreover, some embodiments of chewing gum compositions can include H2-antagonists. Examples of suitable H2-antagonist include cimetidine, ranitidine hydrochloride, famotidine, nizatidien, ebrotidine, mifentidine, roxatidine, pisatidine and aceroxatidine.

Active antacid ingredients include, but are not limited to, the following: aluminium hydroxide, dihydroxyaluminium aminoacetate, aminoacetic acid, aluminium phosphate, dihydroxyaluminium sodium carbonate, bicarbonate, bismuth aluminate, bismuth carbonate, bismuth subcarbonate, bismuth subgallate, bismuth subnitrate, bismuth subsilysilate, calcium carbonate, calcium phosphate, citrate ion (acid or salt), amino acetic acid, hydrate magnesium aluminate sulphate, magaldrate, magnesium aluminosilicate, magnesium carbonate, magnesium glycinate, magnesium hydroxide, magnesium oxide, magnesium trisilicate, milk solids, aluminium mono-ordibasic calcium phosphate, tricalcium phosphate, potassium bicarbonate, sodium tartrate, sodium bicarbonate, magnesium aluminosilicates, tartaric acids and salts thereof.

A variety of other nutritional supplements also may be included in the gum compositions. Virtually any vitamin or mineral may be included. For example, vitamin A, vitamin C, vitamin D, vitamin E, vitamin K, vitamin B6, vitamin B12, thiamine, riboflavin, biotin, folic acid, niacin, pantothenic acid, sodium, potassium, calcium, magnesium, phosphorus, sulphur, chlorine, iron, copper, iodine, zinc, selenium, manganese, choline, chromium, molybdenum, fluorine, cobalt and combinations thereof, may be used.

Examples of nutritional supplements are set forth in U.S. Patent Application Publication Nos. 2003/0157213 A1, 2003/0206993 and 2003/0099741 A1.

Various herbs also may be included such as those with various medicinal or dietary supplement properties. Herbs are generally aromatic plants or plant parts that can be used medicinally or for flavouring. Suitable herbs can be used singly or in various mixtures. Commonly used herbs include Echinacea, Goldenseal, Calendula, Aloe, Blood Root, Grapefruit Seed Extract, Black Cohosh, Cranberry, Ginko Biloba, St. John's Wort, Evening Primrose Oil, Yohimbe Bark, Green Tea, Maca, Bilberry, Lutein, and combinations thereof.

Acidulants also may be included in the chewing gum compositions. Suitable acidulants include, for example, malic acid, adipic acid, citric acid, tartaric acid, fumaric acid, and mixtures thereof.

Any of the aforementioned additives for use in a chewing gum composition, as well as other conventional additives known to one having ordinary skill in the art, such as thickeners, may be incorporated into the chewing gum base of the chewing gum compositions or any coating that the chewing gum product may contain.

According to a further embodiment, there is also provided a chewing gum product comprising a chewing gum composition according to any preceding claim

According to a further aspect of the invention, there is provided a method of manufacturing a composition as described hereinabove, comprising the steps of:
i) providing a chewing gum having a central cavity;
ii) filling the central cavity with a first material in a powder form, the first material having a first average grain size; and
iii) coating the chewing gum with a coating material comprising a second material in a powder form having a second average grain size.

According to one embodiment of the invention, steps (i) and (ii) above may be performed simultaneously or at different times, and may be performed by extrusion or co-extrusion, for example.

According to another embodiment, a coating of a syrup material is added to the gum prior to the addition of the coating comprising the second material. The presence of the syrup material provides a surface to which the second material is able to readily adhere. Once the coating is applied, it is dried and the water is evaporated from the coating to leave a solid coating layer.

The invention will now be described further by way of example with reference to the following examples and figures which are intended to be illustrative only and in no way limiting upon the scope of the invention.
Figure 1 shows a representation of a flow diagram of a process for making the composition of the invention from the ingredient stage to the buffer room.
Figure 2 shows a representation of a flow diagram of a process for making the composition of the invention from the buffer room to packing of the product.

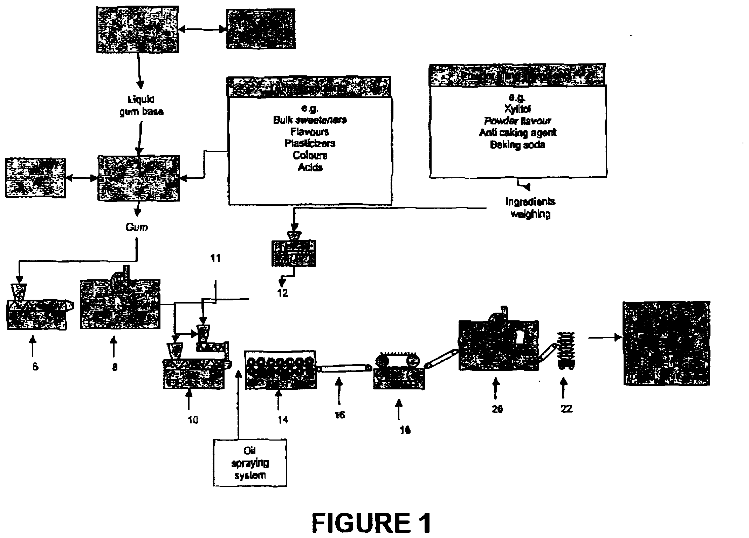

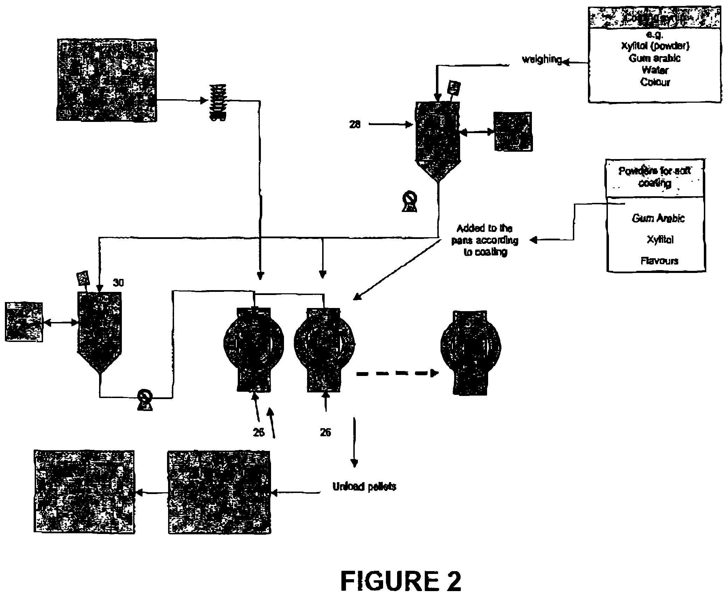

Figures 1 and 2 each illustrate parts of the process which may be used to make the chewing gum composition of the invention. Starting with Figure 1, the gum base material comprising, amongst other components, elastomer, filler and elastomer solvent is fed into a first Z-blade mixer 2. The gum base material can be melted in the Z-blade mixer 2 or mixed normally and added directly into the second mixer. A heater 3 is connected to the Z-blade mixer 2 to regulate the double jacket on the Z-blade mixer 2.

The liquid gum base produced in the first Z-blade mixer 2 is transferred to a second Z-blade mixer 4. At this point, the other components of the chewing gum are added, including polyols such as sorbitol, isomalt and maltitol, which bring sweetness and texturize the gum; maltitol syrup, flavouring agent, sweeteners, plasticizers such as lecithin and/or glycerin, colouring agents, and acids, such as citric or malic acid,. The ingredients are mixed together thoroughly in the second Z-blade mixer 4, under conditions of mixing, to obtain a homogeneous chewing gum mass. The Z-blade mixer 4 is also connected to a heater 5.

The chewing gum mass produced in the second Z-blade mixer 4 is then transferred to an extruder 6 to form the chewing gum mass into a shape having a particular cross section. After leaving the extruder 6, the shaped chewing gum mass is cooled in a cooling tunnel 8 before being fed into a rope extruder 10 to form the chewing gum into a rope shape having a hollow centre cavity running through its length. It is this cavity which is filled with the centre-fill material. The air in the cooling tunnel 8 is around 15°C to obtain a surface temperature of the product of around 30-35°C.

The powder centre-fill material is formed simultaneously as the chewing gum is being formed. The ingredients for the powder centre-fill are weighed before being added via a powder feeder 11 to a paddle blender mixer 12 and blended together. The ingredients include the cooling agent comprising xylitol or maltitol, flavouring agent in powder form, typically two or three encapsulated powder flavours, an anti-caking agent, and a mint variant of baking soda (sodium bicarbonate).

The blend of the powder centre-fill material ingredients is fed from the blender 12 into the rope extruder 10 at a location downstream from the point of addition of the chewing gum, and is fed into the hollow cavity of the chewing gum rope.

The centre-filled chewing gum rope exits the rope extruder 10 and is subjected to oil spraying to avoid stickiness, before being fed into a rope sizing apparatus 14. The oil can be sprayed using an electrostatic system after exiting the rope sizing apparatus 14 but it can also be via a drop by drop system on the rollers. The rope sizing apparatus 14 forms the chewing gum rope into its desired size before the rope is allowed to relax on a relaxation table 16. The relaxed chewing gum is then fed through a chain die apparatus 18 which cuts the chewing gum rope into individual chewing gum pieces of the desired size and shape.

The chewing gum pieces are then transferred into a cooling tunnel 20 which is maintained at a relative humidity of <50%, to cool the pieces to between 10 and 20°C, before being loaded onto trays 22 and stored in a buffer room 24 which is maintained at a relatively constant temperature and relative humidity, between 18-20°C and a relative humidity of between 40-45%.

Figure 2 illustrates the process once the chewing gum pieces are removed from the buffer room 24. The chewing gum pieces are then transferred into a number of coating pans 26 to be coated by the second coating material.

A coating syrup is also prepared simultaneously to the rest of the process, in a similar manner to the centre-fill material. The coating syrup adheres readily to the chewing gum pieces. The ingredients for the coating syrup are xylitol in a powder form as the cooling agent, gum arabic, water, a polysorbate as an anti-foaming agent and one or more colouring agents. The ingredients are weighed out and added to a preparation tank 28 in which the ingredients are mixed together. From the preparation tank, the ingredients are transferred to an injection tank 30 before being used to coat the chewing gum pieces with coating syrup in the coating pans 26. The preparation tank 28 and injection tank 30 are maintained at a temperature of about 50-60°C by heaters 29 and 32.

Separately from the preparation of the coating syrup, the second material for applying to the coating is being prepared in powder form. The second material comprises Quickcoat, which is a mixture of xylitol and gum arabic, Xylitol CM90 as the powder cooling agent, together with liquid flavouring agents.

The coating syrup is added continuously from the injection tank 30 to the chewing gum pieces in the coating pans 26 as the coating pans 26 are rotated at an approximately constant rate, ensuring a correct and consistent distribution of the syrup. Once the coating syrup has satisfactorily coated the chewing gum pieces, the powder comprising the second material - xylitol in this example - is added to the coated chewing gum pieces over a period of time to allow the powder to adhere to and be incorporated into the coating syrup. The coating is then dried with air, evaporating any water from the syrup, giving a solid but soft coating on the chewing gum pieces, which is held together by the gum arabic it contains.

Once the chewing gum pieces have been satisfactorily coated with both the syrup and the powder, they are removed from the coating pans 26 and placed onto trays. They are then stored in a buffer room 34, which is maintained at the same temperature and relative humidity as earlier in the process, before being packaged by a packaging apparatus 36 ready for distribution and sale.

An example of a chewing gum composition in accordance with the invention is detailed below in Table 1 & Table 2.

**Table 1 - Liquid coating syrup**

| Coating Syrup | | |
|---|---|---|
| Ingredient | Dry solids % weight of coating syrup | % weight of coating syrup |
| Gum Arabic | 10.5 | 10.5 |
| Xylitol CM90, Danisco | 59.5 | 59.5 |
| Colour (E133) | 0.005 | 0.005 |
| Water | | 29.995 |
| Total | %MS 70.005 | 100.00 |

**Table 2 - Chewing gum final product formula**

| Gum Formula | | | | |
|---|---|---|---|---|
| Ingredient | Quantity in gum %wt | | Quantity in Final Product %wt | |
| Gum base | 39.00 | | 22.23 | |
| Lecithin | 0.3 | | 0.1710 | |
| Lycasin 80/55 HDS, 85% solids | 8.0 | | 4.56 | |
| Bulk Sweetener (isomalt, sorbitol) | 44.9080 | | 25.5976 | |
| Flavour | 5.15 | | 2.9355 | |
| Colour | 0.002 | | 0.0011 | |
| Water | 0.04 | | 0.0228 | |
| High intensity sweeteners | 2.6 | | 1.482 | |
| Total | **100.00%** | | **57.00%** | |

| Centre fill formula | | | | |
|---|---|---|---|---|
| Ingredient | | Quantity in centre-fill %wt | | Quantity in Final Product %wt |
| Xylitol 700 | | 84.3846 | | 10.97 |
| Talc | | 1.0 | | 0.13 |
| Flavour | | 10.7692 | | 1.4 |
| Baking soda (sodium bicarbonate) | | 3.8462 | | 0.5 |
| **Total** | | **100.00%** | | **13.00%** |

| Coating Formula (dry basis) | | | | |
|---|---|---|---|---|
| Ingredient | Quantity in dry coating %wt | | Quantity in Final Product %wt | |
| Coating solution components (see Table 1 for wet coating ingredients) | | | | |
| Gum Arabic | 4.4697 | | 1.3409 | |
| Xylitol CM90, Danisco | 25.3282 | | 7.5985 | |
| Colour | 0.0021 | | 0.0006 | |

| Powder components | | | | |
|---|---|---|---|---|
| Flavour | 0.200 | | 0.0600 | |
| Xylitol CM90, Danisco | 68.800 | | 20.64 | |
| Gum Arabic | 1.2 | | 0.36 | |
| | | | | |
| **Total** | **100.00%** | | **30.00%** | |

It is of course to be understood that the present invention is not intended to be restricted to the foregoing examples which are described by way of example only.

## Claims

1. A chewing gum composition comprising one or more layers surrounding a central core, at least one of the one or more layers surrounding the central core being a layer of chewing gum, wherein the central core comprises a first material in a powder form having a first average grain size, and wherein the outermost layer of the one or more layers comprises a coating comprising a second material in a powder form having a second average grain size.

2. A composition according to claim 1, wherein the second average grain size of the second material is smaller than the first average grain size of the first material.

3. A composition according to claim 2, wherein the first average grain size of the first material is between 100-1500 microns and the second average grain size of the second material is between 30-300 microns.

4. A composition according to claim 1, wherein the first average grain size of the first material is smaller than the second average grain size of the second material.

5. A composition according to claim 1, wherein the first average grain size of the first material is the same as the second average grain size of the second material.

6. A composition according to any preceding claim, wherein the first material and second material comprise at least an amount of the same material.

7. A composition according to any preceding claim, wherein the first material and second material each comprise a material which imparts a cooling and/or sweetening sensation to the oral cavity of a consumer.

8. A composition according to any preceding claim, wherein the first material and second material are each independently selected from xylitol, sorbitol, erythritol, maltitol or isomalt, or a combination of any two or more thereof.

9. A composition according to any of claims 1-4, wherein the first material and/or second material comprise a material which imparts a warming sensation to the oral cavity of a consumer.

10. A composition according to any preceding claim, wherein the first material and/or second material may comprise a powder having a fruit flavour.

11. A composition according to any preceding claim, comprising one or more layers surrounding a central core, a layer of chewing gum surrounding the central core, and an outer layer substantially surrounding the layer of chewing gum, wherein the central core comprises a first material in a powder form having a first average grain size, and wherein the outer layer comprises a coating comprising a second material in a powder form having a second average grain size.

12. A chewing gum product comprising a chewing gum composition according to any preceding claim.

13. A method of manufacturing a chewing gum composition according to any of claims 1-11, comprising the steps of:
i) providing a chewing gum having a central cavity;
ii) filling the central cavity with a first material in a powder form, the first material having a first average grain size; and
iii) coating the chewing gum with a coating material comprising a second material in a powder form having a second average grain size.

14. A method according to claim 13, wherein a coating of a syrup material is added to the gum prior to the addition of the coating comprising the second material.

15. A method of delivering a dual cooling sensation to an oral cavity of a consumer comprising delivering a chewing gum composition or chewing gum product according to any of claims 1-12 to the oral cavity.

## Patentansprüche

1. Kaugummizusammensetzung, umfassend eine oder mehrere Schichten, die einen zentralen Kern umgeben, wobei mindestens eine der einen oder mehreren Schichten, die den zentralen Kern umgeben, eine Schicht aus Kaugummi ist, wobei der zentrale Kern ein erstes Material in Pulverform mit einer ersten durchschnittlichen Korngröße umfasst und wobei die äußerste Schicht der einen oder mehreren Schichten eine Beschichtung umfasst, die ein zweites Material in Pulverform mit einer zweiten durchschnittlichen Korngröße umfasst.

2. Zusammensetzung nach Anspruch 1, wobei die zweite durchschnittliche Korngröße des zweiten Materials kleiner als die erste durchschnittliche Korngröße des ersten Materials ist.

3. Zusammensetzung nach Anspruch 2, wobei die erste durchschnittliche Korngröße des ersten Materials zwischen 100 bis 1500 Mikrometern liegt und die zweite durchschnittliche Korngröße des zweiten Materials zwischen 30 bis 300 Mikrometern liegt.

4. Zusammensetzung nach Anspruch 1, wobei die erste durchschnittliche Korngröße des ersten Materials kleiner als die zweite durchschnittliche Korngröße des zweiten Materials ist.

5. Zusammensetzung nach Anspruch 1, wobei die erste durchschnittliche Korngröße des ersten Materials gleich der zweiten durchschnittlichen Korngröße des zweiten Materials ist.

6. Zusammensetzung nach einem der vorstehenden Ansprüche, wobei das erste Material und das zweite Material mindestens eine Menge des gleichen Materials umfassen.

7. Zusammensetzung nach einem der vorstehenden Ansprüche, wobei das erste Material und das zweite Material jeweils ein Material umfassen, das der Mundhöhle eines Konsumenten ein kühlendes und/oder süßendes Gefühl vermittelt.

8. Zusammensetzung nach einem der vorstehenden Ansprüche, wobei das erste Material und das zweite Material jeweils unabhängig voneinander ausgewählt sind aus Xylit, Sorbit, Erythrit, Maltit oder Isomalt oder einer Kombination von zwei oder mehreren davon.

9. Zusammensetzung nach einem der Ansprüche 1 bis 4, wobei das erste Material und/oder das zweite Material ein Material umfassen, das der Mundhöhle eines Konsumenten ein wärmendes Gefühl vermittelt.

10. Zusammensetzung nach einem der vorstehenden Ansprüche, wobei das erste Material und/oder das zweite Material ein Pulver mit einem Fruchtgeschmack umfassen kann.

11. Zusammensetzung nach einem der vorstehenden Ansprüche, umfassend eine oder mehrere Schichten, die einen zentralen Kern umgeben, eine Schicht aus Kaugummi, die den zentralen Kern umgibt, und eine äußere Schicht, die im Wesentlichen die Schicht aus Kaugummi umgibt, wobei der zentrale Kern ein erstes Material in Pulverform mit einer ersten durchschnittlichen Korngröße umfasst und wobei die äußere Schicht eine Beschichtung umfasst, die ein zweites Material in Pulverform mit einer zweiten durchschnittlichen Korngröße umfasst.

12. Kaugummiprodukt, umfassend eine Kaugummizusammensetzung nach einem der vorstehenden Ansprüche.

13. Verfahren zur Herstellung einer Kaugummizusammensetzung nach einem der Ansprüche 1 bis 11, umfassend die Schritte:
i) Bereitstellen eines Kaugummis mit einem zentralen Hohlraum;
ii) Füllen des zentralen Hohlraums mit einem ersten Material in Pulverform, wobei das erste Material eine erste durchschnittliche Korngröße aufweist; und
iii) Beschichten des Kaugummis mit einem Beschichtungsmaterial, das ein zweites Material in Pulverform mit einer zweiten durchschnittlichen Korngröße umfasst.

14. Verfahren nach Anspruch 13, wobei dem Kaugummi eine Beschichtung aus einem Sirupmaterial hinzugefügt wird, bevor die das zweite Material umfassende Beschichtung hinzugefügt wird.

15. Verfahren zum Abgeben eines zweifachen Kühlgefühls an eine Mundhöhle eines Konsumenten, umfassend das Abgeben einer Kaugummizusammensetzung oder eines Kaugummiprodukts nach einem der Ansprüche 1 bis 12 an die Mundhöhle.

## Revendications

1. Composition de chewing-gum comprenant une ou plusieurs couches entourant un cœur central, au moins l'une parmi la ou les couches entourant le cœur central étant une couche de chewing-gum, dans laquelle le cœur central comprend un premier matériau sous une forme de poudre ayant une première granulométrie moyenne, et dans laquelle la couche externe de la ou des couches comprend un enrobage comprenant un deuxième matériau sous une forme de poudre ayant une deuxième granulométrie moyenne.

2. Composition selon la revendication 1, dans laquelle la deuxième granulométrie moyenne du deuxième matériau est plus petite que la première granulométrie moyenne du premier matériau.

3. Composition selon la revendication 2, dans laquelle la première granulométrie moyenne du premier matériau est comprise entre 100 et 1500 micromètres et la deuxième granulométrie moyenne du deuxième matériau est comprise entre 30 et 300 micromètres.

4. Composition selon la revendication 1, dans laquelle la première granulométrie moyenne du premier matériau est plus petite que la deuxième granulométrie moyenne du deuxième matériau.

5. Composition selon la revendication 1, dans laquelle la première granulométrie moyenne du premier matériau est la même que la deuxième granulométrie moyenne du deuxième matériau.

6. Composition selon une quelconque revendication précédente, dans laquelle les premier matériau et deuxième matériau comprennent au moins une quantité du même matériau.

7. Composition selon une quelconque revendication précédente, dans laquelle les premier matériau et deuxième matériau comprennent chacun un matériau qui communique une sensation de rafraîchissement et/ou d'édulcoration à la cavité buccale d'un consommateur.

8. Composition selon une quelconque revendication précédente, dans laquelle les premier matériau et deuxième matériau sont chacun indépendamment choisis parmi xylitol, sorbitol, érythritol, maltitol ou isomalt, ou une combinaison de deux quelconques de ceux-ci ou plus.

9. Composition selon l'une quelconque des revendications 1 à 4, dans laquelle les premier matériau et/ou deuxième matériau comprennent un matériau qui communique une sensation de réchauffement à la cavité buccale d'un consommateur.

10. Composition selon une quelconque revendication précédente, dans laquelle les premier matériau et/ou deuxième matériau peuvent comprendre une poudre ayant une saveur de fruit.

11. Composition selon une quelconque revendication précédente, comprenant une ou plusieurs couches entourant un cœur central, une couche de chewing-gum entourant le cœur central, et une couche externe entourant sensiblement la couche de chewing-gum, dans laquelle le cœur central comprend un premier matériau sous une forme de poudre ayant une première granulométrie moyenne, et dans laquelle la couche externe comprend un enrobage comprenant un deuxième matériau sous une forme de poudre ayant une deuxième granulométrie moyenne.

12. Produit de chewing-gum comprenant une composition de chewing-gum selon une quelconque revendication précédente.

13. Procédé de fabrication d'une composition de chewing-gum selon l'une quelconque des revendications 1 à 11, comprenant les étapes consistant à :
i) fournir un chewing-gum ayant une cavité centrale ;
ii) fourrer la cavité centrale avec un premier matériau sous une forme de poudre, le premier matériau ayant une première granulométrie moyenne ; et
iii) enrober le chewing-gum avec un matériau d'enrobage comprenant un deuxième matériau sous une forme de poudre ayant une deuxième granulométrie moyenne.

14. Procédé selon la revendication 13, dans lequel un enrobage d'un matériau de sirop est ajouté à la gomme avant l'addition de l'enrobage comprenant le deuxième matériau.

15. Procédé d'administration d'une double sensation de rafraîchissement à une cavité buccale d'un consommateur comprenant l'administration d'une composition de chewing-gum ou d'un produit de chewing-gum selon l'une quelconque des revendications 1 à 12 à la cavité buccale.
